# EUROPÄISCHE PATENTSCHRIFT

(11) **EP 0 654 341 B1**
(45) Veröffentlichungstag und Bekanntmachung des Hinweises auf die Patenterteilung: **17.03.1999**
(21) Anmeldenummer: 94117894.9
(22) Anmeldetag: 12.11.1994
(51) Int. Cl.: B29C 70/16, B29C 70/50, B29B 7/90

(54) **Verfahren zur kontinuierlichen Herstellung von verstärkten Kunststoffen**
Method for the continuous production of reinforced plastics
Procédé de fabrication en continu de matériaux plastiques renforcés

(30) Priorität: 24.11.1993 DE 4339963
(43) Veröffentlichungstag der Anmeldung: 24.05.1995
(73) Patentinhaber: Borealis AG, 2323 Schwechat-Mannswörth (AT)
(72) Erfinder: Blauhut, Wilfried, Dipl.-Ing., A-4040 Linz (AT); Zopf, Ernst, A-4222 St. Georgen (AT); Begemann, Michael, Dr.-Ing., A-4203 Altenberg (AT)
(74) Vertreter: Kunz, Ekkehard, Dr.

(56) Entgegenhaltungen:
- EP-A- 0 148 761
- EP-A- 0 416 859
- DE-A- 4 236 662
- GB-A- 1 151 964

## Beschreibung

Die Erfindung betrifft ein Verfahren zur kontinuierlichen Herstellung von faserverstärkten thermoplastischen Kunststoffen, bei dem den flüssigen Kunststoffen kontinuierlich Verstärkungsfasern von mindestens 13 mm Faserlänge zudosiert werden, sowie Formkörper, die durch Verpressen von Bahnen oder Platten aus diesen Kunststoffen hergestellt werden.

Es ist bekannt, Formkörper durch Verpressen von Bahnen oder Platten aus faserverstärkten Kunststoffen herzustellen. Die Herstellung dieser Bahnen oder Platten erfolgt durch Imprägnierung von genadelten Glasfasermatten oder Glasfaservliesen mit thermoplastischen Kunststoffschmelzen wie beispielsweise in DE-OS 23 12 816 beschrieben. Um den Zusammenhalt der vorher in einem gesonderten Arbeitsgang hergestellten Glasfasermatten oder Glasfaservliese zu gewährleisten, werden diese entweder durch ein Bindemittel bei der Herstellung verklebt - dies ist insbesondere üblich bei Endlosfasermatten - oder vernadelt. Um eine ausreichende Verfestigung bei der Vernadelung zu erzielen, werden dabei Fasern mit Längen von etwa 100 bis 150 mm eingesetzt. Auch Matten aus kontinuierlichen Endlosfasern können vernadelt werden. Diese relativ langen bzw. endlosen Fasern ergeben jedoch beim anschließenden Heißpressen zu den gewünschten Formteilen den Nachteil, daß sie aufgrund ihres Zusammenhaltes nur erschwert mit der Kunststoffschmelze mitfließen, sodaß insbesondere bei komplizierten Formteilen in die entfernteren Teile, beispielsweise Rippen oder Hinterschneidungen vorwiegend nur die Kunststoffschmelze fließt und keine Verstärkungsfasern und daß dadurch gerade diese besonders beanspruchten Teile nur sehr wenige bzw. gar keine Verstärkungsfasern enthalten. Dieser Nachteil wird in der DE-PS 23 11 856 dadurch umgangen, daß die Platten in einem zweistufigen Verfahren dadurch hergestellt werden, daß Kunststoffpulver und Glasfasern von 10 bis 100 mm Länge vorgemischt werden und die Mischung anschließend in einem weiteren Verfahrensschritt zu Platten verpreßt wird. Dieser Trockenmischvorgang hat jedoch den Nachteil, daß die Glasfasern mechanisch sehr stark beansprucht werden und dadurch ein übermäßig hoher Anteil an extrem kurzen Faserbruchstücken entsteht. Die erhaltenen Platten werden anschließend in bekannter Weise zu den gewünschten Endprodukten verpreßt. Gemäß EP-A-416,859 werden Verstärkungsfasern von über 25,4 mm (1 inch) Länge und Thermoplaste in einer aus zwei Extrudern bestehenden Extrusionsapparatur compoundiert. Dabei wird der Thermoplast im ersten Extruder aufgeschmolzen, die Schmelze den Verstärkungsfasern im zweiten Extruder zudosiert und vermischt.

Faserverstärkte Fertigprodukte, bei denen relativ kurze Fasern eingesetzt werden, werden bevorzugt im Spritzgußverfahren aus faservertärktem Granulat hergestellt. Bedingt durch die Granulatherstellung ist hiebei die Faserlänge auf maximal die Korngröße des Granulats beschränkt, diese beträgt üblicherweise wenige mm. Die Verwendung dieser kurzen Fasern ergibt jedoch den Nachteil, daß vor allem die mechanischen Eigenschaften der aus den Platten durch Verpressen hergestellten Fertigteile in vielen Fällen nicht ausreichend sind.

Die Aufgabe der Erfindung lag darin, faserverstärkte Kunststoffe in einem einfachen Verfahren bereitzustellen, die zu Produkten mit guten und gleichmäßigen Eigenschaften verarbeitet werden können. Die Lösung ergab sich durch Verwendung von Verstärkungsfasern mit einer Faserlänge von mindestens 13 mm, die den flüssigen Kunststoffen in einer kontinuierlichen Mischapparatur zudosiert wurden.

Gegenstand der Erfindung ist demnach ein Verfahren zur kontinuierlichen Herstellung von faserverstärkten thermoplastischen Kunststoffen, das dadurch gekennzeichnet ist, daß den flüssigen Kunststoffen in einer kontinuierlichen, aus einem Mehrkammerkneter mit mehreren in Serie angeordneten Kammern bestehenden Mischapparatur Verstärkungsfasern mit einer Länge von 13 bis 100 mm, sowie gegebenenfalls übliche Zusätze, wie z. B. Stabilisatoren, Farbstoffe, Füllstoffe, Flammschutzmittel, zudosiert werden, die Mischung derart schonend homogenisiert wird, daß bei mindestens 50 Gew.% der eingesetzten Verstärkungsfasern die ursprüngliche Faserlänge zu mindestens 90 % erhalten bleibt, und die Mischung anschließend kontinuierlich aus der Mischapparatur ausgetragen wird.

Ein weiterer Gegenstand der Erfindung sind Formteile aus faserverstärkten thermoplastischen Kunststoffen mit gleichmäßiger Faserverteilung, die durch Verpressen von erfindungsgemäß hergestellten Platten oder Bahnen aus faserverstärkten thermoplastischen Kunststoffen hergestellt werden.

Ein weiterer Gegenstand der Erfindung ist ein Verfahren zur Herstellung von Formteilen aus faserverstärkten thermoplastischen Kunststoffen, das dadurch gekennzeichnet ist, daß die erfindungsgegemäß hergestellten faserverstärkten Kunststoffe im Anschluß an den Austrag aus der Mischapparatur portioniert und direkt einer Formteilpresse zugeführt und darin Formteile hergestellt werden.

Als Kunststoffe können alle thermoplastisch verarbeitbaren Kunststoffe, wie z.B. Polyolefine, Polyamide, Polyester, Polycarbonate, Polystyrol, thermoplastische Polyurethane, Polyimide, Polyetherimide, Polyetherketone, Polysulfone, Polyphenylensulfid verwendet werden. Besonders bevorzugt sind Polyolefine, beispielsweise Polypropylene. Die Kunststoffe werden entweder direkt in der Mischapparatur aufgeschmolzen oder der Mischapparatur in bereits schmelzflüssigem Zustand zugeführt.

Als Verstärkungsfasern werden bevorzugt Glasfasern verwendet. Entsprechend den Anforderungen an die mechanischen Eigenschaften der Fertigteile können jedoch auch andere bekannte Verstärkungsfasern, wie z.B. Kohlefasern, Aramidfasern, Keramikfasern, Mineralfasern, Metallfaser oder Mischungen aus diesen Fasern verwendet werden. Die bevorzugte Faserlänge liegt bei 26 bis 100 mm, besonders bevorzugt sind Verstärkungsfasern mit Längen von 26 bis 52 mm. Die eingesetzten Fasern können entweder von einheitlicher Schnittlänge sein, es ist jedoch auch möglich, eine Mischung von Fasern verschiedener Schnittlängen einzusetzen.

Als Mischapparaturen eignen sich kontinuierliche Mehrkammerkneter, die aus mehreren in Serie angeordneten Kammern, die bevorzugt mit Knetarmen ausgerüstet sind, bestehen, wie sie beispielsweise von Fa. Propex angeboten werden. Die schonende Homogenisierung unter weitgehender Beibehaltung der ursprünglichen Faserlängen wird insbesondere durch geringe Scherkräfte beim Mischprozeß erreicht. Der Austrag aus der Mischapparatur erfolgt über entsprechende Düsen, beispielsweise über Breitschlitzdüsen für Platten und Bahnen bzw. über entsprechend gestaltete Profildüsen für Profile mit anderem Querschnitt. Die über die Düsen ausgetragene Kunststoffschmelze kann anschließend auf Raumtemperatur abgekühlt werden, wobei die Schmelze erstarrt und das entsprechende Halbzeug, beispielsweise Platten, Bahnen oder Profile erhalten werden. Eine weitere vorteilhafte Ausgestaltungsmöglichkeit des Verfahrens ist die Portionierung der faserhaltigen Schmelze anschließend an den Austrag aus der Mischapparatur und unmittelbare Überführung in eine Formteilpresse. Auf diese Weise wird die thermische Belastung des Kunststoffes durch den Wegfall eines Abkühl- und eines Wiederaufheizschrittes erheblich reduziert und überdies der Formteilpresse ein Vorprodukt mit einer so gleichmäßigen Temperatur zur Verfügung gestellt, wie dies durch Aufheizen eines kalten Halbzeuges (z. B. einer Platte oder eines Profilabschnittes) niemals erreicht werden kann. Durch den Wegfall des zusätzlichen Kühl- und Wiederaufheizvorganges werden die faserverstärkten Kunststofformteile überdies in einem besonders einfachen Verfahren erhalten.

Erfindungsgemäß hergestellte Bahnen und Platten können besonders vorteilhaft in Formpressen nach üblichen Verfahren unter Anwendung von Wärme und Druck zu Fertigteilen verpreßt werden. Der Vorteil der erfindungsgemäß hergestellten Platten und Bahnen liegt vor allem darin, daß aus ihnen beim Pressen Formteile mit gleichmäßiger Faserverteilung erhalten werden, wobei die Verstärkungsfasern insbesonders auch in entlegene Teile komplizierter Formen bzw. in Rippen und Hinterschneidungen gelangen.

### Beispiel:

In einer Apparatur bestehend aus einem Einschnecken-Extruder (Schneckendurchmesser 50 mm, L/D = 25) und einer kontinuierlichen Knetmaschine ("Conterna" von Fa. Propex) mit 4 Knetkammern zu je 2,5 l Inhalt wurde ein Gemisch von 70 Gew.% Polypropylen mit einem MFI (melt flow index gemäß ISO 1133/DIN 53735) von 50 g/10 min bei 230°C und 2,16 kg Belastung (Daplen US 105 A von PCD Polymere) und 30 Gew.% Glasfaser (Vetrotex EC 14-2400 P365, Schnittlänge 37,5 mm) mit einem Durchsatz von 32 kg/h hergestellt und durch eine Breitschlitzdüse von 250 x 4 mm als flacher Strang ausgetragen. Hievon wurden Stücke von 500 mm Länge abgetrennt und jeweils zwischen 2 Stahlplatten von 10 mm Dicke bei einer Belastung von 100 kg abgekühlt und erstarren gelassen.

Das erhaltene Produkt hatte folgende Eigenschaften:
Dicke: 3,9 mm
Glasgehalt (bestimmt durch Veraschen): 29,8 Gew.%
Dichte: 1,12 g/cm³
Anteil der Glasfasern mit einer Länge von über 34 mm: 56 %
Zug-E-Modul längs: 4100 N/mm²
Zug-E-Modul quer: 3500 N/mm²
Reißfestigkeit längs: 35 N/mm²
Reißfestigkeit quer: 40 N/mm²
Reißdehnung längs: 2,1 %
Reißdehnung quer: 1,9 %
Schlagzähigkeit längs: 36 kJ/m²
Schlagzähigkeit quer: 34 kJ/m²

Reißfestigkeit, Reißdehnung und Zug-E-Moduli wurden gemäß EN 61, die Schlagzähigkeit gemäß ISO 179 bestimmt.

## Patentansprüche

1. Verfahren zur kontinuierlichen Herstellung von faserverstärkten thermoplastischen Kunststoffen, dadurch gekennzeichnet, daß den flüssigen Kunststoffen in einer kontinuierlichen, aus einem Mehrkammerkneter mit mehreren in Serie angeordneten Kammern bestehenden Mischapparatur Verstärkungsfasern mit einer Länge von 13 bis 100 mm, sowie gegebenenfalls übliche Zusätze zudosiert werden, die Mischung derart schonend homogenisiert wird, daß bei mindestens 50 Gew.% der eingesetzten Verstärkungsfasern die ursprüngliche Faserlänge zu mindestens 90 % erhalten bleibt, und die Mischung anschließend kontinuierlich aus der Mischapparatur ausgetragen wird.

2. Verfahren gemäß Anspruch 1, dadurch gekennzeichnet, daß die Faserlänge der eingesetzten Verstärkungsfasern 26 bis 100 mm beträgt.

3. Verfahren gemäß Anspruch 2, dadurch gekennzeichnet, daß die Faserlänge der eingesetzten Verstärkungsfasern 26 bis 52 mm beträgt.

4. Verfahren gemäß einem der Ansprüche 1 bis 3, dadurch gekennzeichnet, daß als Kunststoffe Polyolefine eingesetzt werden

5. Verfahren gemäß einem der Ansprüche 1 bis 4, dadurch gekennzeichnet, daß als Verstärkungsfasern Glasfasern eingesetzt werden.

6. Faserverstärkte thermoplastische Kunststoffe, die Verstärkungsfasern mit einer Länge von 13 bis 100 mm in gleichmäßiger Verteilung enthalten, die dadurch erhalten werden, daß flüssigen Kunststoffen in einer kontinuierlichen, aus einem Mehrkammerkneter mit mehreren in Serie angeordneten Kammern bestehenden Mischapparatur Verstärkungsfasern mit einer Länge von 13 bis 100 mm, sowie gegebenenfalls übliche Zusätze zudosiert werden, die Mischung derart schonend homogenisiert wird, daß bei mindestens 50 Gew.% der eingesetzten Verstärkungsfasern die ursprüngliche Faserlänge zu mindestens 90 % erhalten bleibt, und die Mischung anschließend kontinuierlich aus der Mischapparatur ausgetragen wird.

7. Formteile aus faserverstärkten thermoplastischen Kunststoffen mit gleichmäßiger Faserverteilung, dadurch gekennzeichnet, daß sie durch Verpressen einer Bahn oder Platte aus faserverstärkten thermoplastischen Kunststoffen gemäß Anspruch 6 hergestellt werden.

8. Verfahren zur Herstellung von Formteilen aus faserverstärkten thermoplastischen Kunststoffen, dadurch gekennzeichnet, daß die gemäß einem der Ansprüche 1 bis 5 hergestellten faserverstärkten Kunststoffe im Anschluß an den Austrag aus der Mischapparatur portioniert und direkt einer Formteilpresse zugeführt und darin Formteile hergestellt werden.

## Claims

1. Process for the continuous production of fibre-reinforced thermoplastics, characterized in that reinforcing fibres having a length of from 13 to 100 mm, and also conventional additives if desired, are metered into the fluid plastics in a continuous mixing apparatus composed of a multi-chamber kneader with more than one chamber arranged in series, and the mixture is homogenized under gentle conditions in a manner such that at least 50% by weight of the reinforcing fibres used retain at least 90% of their original fibre length, and the mixture is then continuously discharged from the mixing apparatus.

2. Process according to Claim 1, characterized in that the fibre length of the reinforcing fibres used is from 26 to 100 mm.

3. Process according to Claim 2, characterized in that the fibre length of the reinforcing fibres used is from 26 to 52 mm.

4. Process according to one of Claims 1 to 3, characterized in that the plastics used are polyolefins

5. Process according to one of Claims 1 to 4, characterized in that the reinforcing fibres used are glass fibres.

6. Fibre-reinforced thermoplastics which comprise uniformly distributed reinforcing fibres having a length of from 13 to 100 mm and obtained by metering reinforcing fibres having a length of from 13 to 100 mm, and also conventional additives if desired, into fluid plastics in a continuous mixing apparatus composed of a multi-chamber kneader with more than one chamber arranged in series, and homogenizing the mixture under gentle conditions in a manner such that at least 50% by weight of the reinforcing fibres used retain at least 90% of their original fibre length, and then discharging the mixture continuously from the mixing apparatus.

7. Mouldings made from fibre-reinforced thermoplastics having uniform fibre distribution, characterized in that they are produced by press-moulding a web or sheet made from fibre-reinforced thermoplastics according to Claim 6.

8. Process for producing mouldings from fibre-reinforced thermoplastics, characterized in that the fibre-reinforced plastics produced according to one of Claims 1 to 5 are separated into portions after discharge from the mixing apparatus and directly fed to a moulding press and that mouldings are produced therein.

## Revendications

1. Procédé de fabrication en continu de matières thermoplastiques renforcées par des fibres, caractérisé en ce qu'on ajoute aux matières plastiques liquides, de façon dosée, dans un appareil mélangeur à régime continu, formé d'un malaxeur à plusieurs chambres, lesdites chambres étant montées en série, des fibres de renfort de 13 à 100 mm de longueur, ainsi qu'éventuellement des additifs usuels, on homogénéise le mélange dans des conditions modérées de telle façon qu'au moins 50 % en poids des fibres de renfort utilisées conservent au moins 90 % de leur longueur initiale et ensuite, on soutire le mélange de l'appareil mélangeur en continu.

2. Procédé selon la revendication 1, caractérisé en ce que la longueur des fibres de renfort utilisées est de 26 à 100 mm.

3. Procédé selon la revendication 2, caractérisé en ce que la longueur des fibres de renfort utilisées est de 26 à 52 mm.

4. Procédé selon l'une des revendications 1 à 3, caractérisé en ce qu'on utilise des polyoléfines en tant que matières plastiques.

5. Procédé selon l'une des revendications 1 à 4, caractérisé en ce qu'on utilise des fibres de verre en tant que fibres de renfort.

6. Matières thermoplastiques renforcées par des fibres, qui contiennent des fibres de renfort de 13 à 100 mm de longueur, distribuées de façon homogène, qu'on obtient en ajoutant aux matières plastiques liquides, de façon dosée, dans un appareil mélangeur à régime continu formé d'un malaxeur à plusieurs chambres, lesdites chambres étant montées en série, des fibres de renfort de 13 à 100 mm de longueur, ainsi qu'éventuellement des additifs usuels, en homogénéisant le mélange dans des conditions modérées de telle façon qu'au moins 50 % en poids des fibres de renfort utilisées conservent au moins 90 % de leur longueur initiale et ensuite, en soutirant le mélange de l'appareil mélangeur en continu.

7. Elément moulés formés de matières plastiques renforcées par des fibres, caractérisés en ce qu'on les fabrique par compression d'une bande ou d'une plaque de matières thermoplastiques renforcées par des fibres selon la revendication 6.

8. Procédé de fabrication d'éléments moulés formés de matières thermoplastiques renforcées par des fibres, caractérisé en ce qu'on proportionne les matières plastiques renforcées par des fibres, fabriquées selon l'une des revendications 1 à 5, directement après leur sortie de l'appareil mélangeur et on les amène directement dans une presse à fabriquer des éléments moulés dans laquelle on fabrique des éléments moulés.
